# EUROPEAN PATENT SPECIFICATION

(11) **EP 4 084 970 B1**
(45) Date of publication and mention of the grant of the patent: **10.09.2025**
(21) Application number: 19845681.6
(22) Date of filing: 31.12.2019
(51) Int. Cl.: B60C 11/03, B60C 11/12

(54) **TIRE HAVING CORKSCREW SCULPTURE WITH INVERTED CENTRAL RIB FEATURES**
REIFEN MIT KORKENZIEHERMODELLIERUNG MIT UMGEKEHRTEN ZENTRALEN RIPPENMERKMALEN
PNEU À SCULPTURE HÉLICOIDALE AVEC DES CARACTÉRISTIQUES DE NERVURE CENTRALE INVERSÉE

(43) Date of publication of application: 09.11.2022
(73) Proprietor: COMPAGNIE GENERALE DES ETABLISSEMENTS MICHELIN, 63000 Clermont-Ferrand (FR)
(72) Inventor: KOSE, Sadi, Greenville, South Carolina 29605 (US); GAYLO, Ryan Michael, Greenville, South Carolina 29605 (US)
(74) Representative: Casalonga
(86) International application number: PCT/US2019/069096
(87) International publication number: WO 2021/137860

(56) References cited:
- EP-A1- 0 599 566
- EP-A1- 1 834 813
- WO-A1-2017/187739
- DE-A1- 19 827 244

## Description

### FIELD OF THE INVENTION

The subject matter of the present invention relates to a non-directional tire tread sculpture having excellent dry traction while maintaining good snow and wet traction with minimal lateral pull. In particular, the present invention relates to a tread for a passenger car tire according to the preamble independent claim 1, such as it is known e.g. from DE112017002247B4.

### BACKGROUND OF THE INVENTION

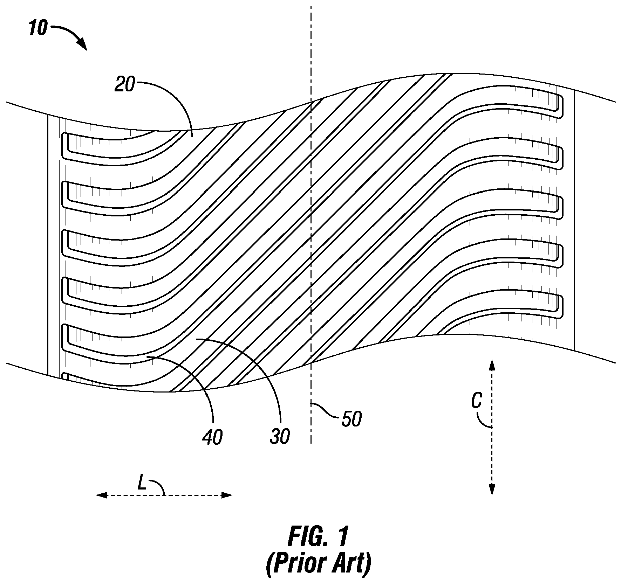

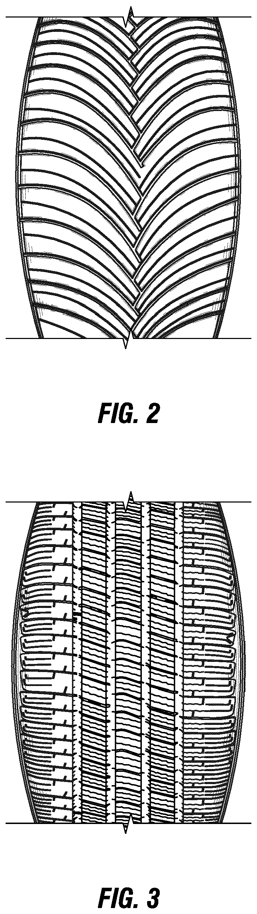

A non-directional tire tread sculpture designed to achieve a high level of dry braking and great handling while not sacrificing snow traction a sculpture design implementing a continuous rib design across the entire width of the tire summit while reducing lateral pull due to the effect of the tread sculpture is desired. To avoid reduce the noise of the sculpture, the sculpture may be angled, forming a corkscrew sculpture design such as shown in FIG. 1 or V-shaped sculpture design such as shown in FIG. 2 or other shape as the rib extends across the lateral width of the tread. Typically sculpture designs achieve lateral snow traction through breaking the continuous nature of an otherwise continuous rib by implementing circumferentially oriented sipes and circumferentially oriented grooves such as the example shown in FIG 3. Such breaks in the rib reduces the rigidity of the sculpture and hurt dry braking and handling characteristics of the tire.

Angled lateral ribs 30, such as shown incorporated into a tire tread 20 shown in the partial view of a tire 10 in FIG. 1, provide excellent snow and dry traction. Such sculpture designs that implement such a continuous angled rib design suffer, however, from significant levels of lateral pull under driving or braking torque. Lateral pull occurs when the tire generates a force in the lateral direction as it rolls forward, backward or is under torque in those directions. One solution to address the lateral pull is by using a directional sculpture design such as found with directional V-shaped sculptures. Directional designs limit tire rotation options for customers and vehicle manufacturers find that non-directional designs simplify manufacturing complexity.

What is needed is a non-directional helical tire tread sculpture having reduced lateral pull under driving and braking torque. A tread having good dry traction and good snow traction would be particularly useful.

### SUMMARY OF THE INVENTION

This objective is achieved by a tread for a passenger car tire according to independent claim 1. The dependent claims relate to advantageous embodiments.

Aspects and advantages of the invention will be set forth in part in the following description, or may be obvious from the description, or may be learned through practice of the invention.

The tire exhibits excellent dry braking performance while having low lateral pull and good snow and wet traction.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 provides an elevation view of a tire tread sculpture of a tire having a helical tread pattern and serving as a witness tire W1.
FIG. 2 provides an elevation view of a v-shaped feature tire tread serving as a witness tire W2.
FIG. 3 provides an elevation view of a five-rib tire tread serving as a witness tire W3.
FIG. 4 provides an elevation view of an embodiment of a tire tread sculpture having a helical tread pattern and a center rib in accordance with the invention.
FIG. 5 provides an elevation view of another embodiment of a tire tread sculpture having a helical tread pattern and a center rib in accordance with the invention.

The use of identical or similar reference numerals in different figures denotes identical or similar features.

### DETAILED DESCRIPTION OF THE INVENTION

The following terms are defined as follows for this disclosure:
"Axial direction" or the letter "A" in the figures refers to a direction parallel to the axis of rotation of for example, tire and/or wheel as it travels along a road surface.

"Radial direction" or the letter "R" in the figures refers to a direction that is orthogonal to the axial direction and extends in the same direction as any radius that extends orthogonally from the axial direction.

"Equatorial plane" means a plane that passes perpendicular to the axis of rotation and bisects the outer tread band and/or wheel structure.

"Contact Patch" is the surface region of the tread that contacts the road surface when the tire is mounted on an applicable rim as specified by the following industrial standards, the tire is filled with air to the rated internal pressure, and the tire carries the rated load. "Industrial Standards" here refers to industrial standards that are in effect where the tire is produced or used. For instance, in Europe the industrial standards are the "Standards Manual" of ETRTO (The European Tyre and Rim Technical Organization); in the US they are the "Yearbook" of the TRA (The Tire and Rim Association, Inc.); and in Japan they are the "JATMA Yearbook" of JATMA (the Japan Automobile Tire Manufacturers Association). Moreover, the "applicable rim" is a rim that is specified in these standards in accordance with tire size; the "rated internal pressure" is the air pressure specified in accordance with the load capacity in these standards; and the "rated load" is the maximum allowable weight that the tire can carry.

"Circumferential direction" or the letter "C" in the figures refers to a direction is orthogonal to the axial direction and orthogonal to a radial direction.

"Forward direction of travel" or the letter "F" in the figures refers to the direction the tire was designed to predominantly travel in for aesthetics and or performance reasons. Travel in a direction different than the forward direction of travel is possible and anticipated.

"Direction of rotation" or the letter "D" in the figures refers to the direction the tire was designed to predominantly rotate in for aesthetics and/or performance reasons. Rotation in a direction opposite than the direction of rotation is possible and anticipated.

"Radial plane" means a plane that passes perpendicular to the equatorial plane and through the axis of rotation of the wheel.

"Sipe" is defined herein as a depression or groove in the tire tread having a length longer than its width, and a width of 2mm or less.

"Groove" is defined herein as a depression in the tire tread having a length longer than its width with a width of greater than 2mm.

"Lateral direction" or the letter "L" means a direction that is orthogonal to an equatorial plane.

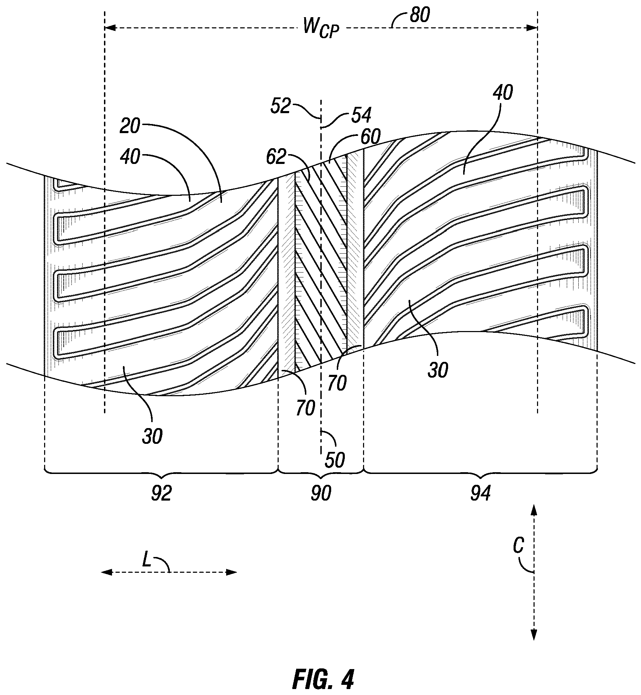

FIG. 4 provides an exemplary embodiment of the present invention of a tread sculpture 20 on a tire 10. The design possesses a significant improvement of dry braking while maintaining adequate snow performance and reducing and even eliminating the lateral pull under torque associated with previous helical tread designs.

The design includes a middle region 90 that includes a circumferentially oriented rib 60 having a plurality of lateral features 62 extending across the rib in the lateral direction. These lateral features 62, are sipes. The lateral features 62 of the center rib 60 have a length extending at an acute angle from a second side 52 of the equatorial plane 50 of the tire 10 in a second angular direction to the circumferential direction C of the tire 10.

A first shoulder region 92 extends from the middle region 90 to a first lateral edge of the tread. A first plurality of continuous lateral ribs 32 extend from the middle region 90 through the first shoulder region. The first plurality of lateral ribs 32 are separated by lateral features 40. The first plurality of lateral ribs 32 are inclined at an acute angle in a first direction of the circumferential direction C of the tire 10 where the first direction is opposite of the first direction. In other words, the first plurality of lateral features extend at an acute angle from a first side of the equatorial plane in a first angular direction and the lateral features 62 of the center rib 60 extend at an acute angle from a second side of the equatorial plane in the second angular direction.

A second shoulder region 94 extends from the middle region 90 to a second lateral edge of the tread. A second plurality of lateral features 34 extend from the middle region 90 through the second shoulder region 94. The second plurality of lateral ribs 34 are separated by lateral features 40. The second plurality of lateral ribs 34 are inclined at an acute angle in a second direction of the circumferential direction C of the tire 10 where the second direction is opposite of the first direction. In other words, the second plurality of lateral features extend at an acute angle from a first side of the equatorial plane and the lateral features 62 of the center rib 60 extend at an acute angle from a second side of the equatorial plane in the second angular direction.

In this embodiment, the acute angle of the first plurality of lateral features 32 is in the range of 40 degrees to 55 degrees from the first side of the equatorial plane in the first angular direction. The acute angle of the second plurality of lateral features 34 is, likewise, in the range of 40 degrees to 55 degrees from the first side of the equatorial plane in the first angular direction. The plurality of lateral features 62 of the center rib 60 extend at an angle of 45 degrees to 60 degrees from the second side of the equatorial plane in a second angular direction.

The first plurality of lateral features 32 and the second plurality of lateral features 34 are curved such that the angle to the equatorial plane 50 becomes greater the farther the lateral feature is away from the center of the tread. The angle is measured along the center of the feature from the portion closest to the center of the tire to 50% of the distance to the edge of the contact patch.

Additionally, in this embodiment, three are circumferential grooves 70 to aid in hydro performance or lateral snow grip. The circumferential groove 70 are positioned between the middle region 90 and the first shoulder region 92 and between the middle region 90 and the second shoulder region 94.

A study was completed and testing of several designs was done. These results can be found in Table 1 below. The results were normalized to the third witness labeled W3 in the table, a conventionally circumferentially grooved tire having five circumferential ribs extending around the circumference of the tire as shown in FIG. 3. Also tested was a helical design labeled W1 in the table and having a tread sculpture as shown in FIG. 1 and a tire having a plurality of v-shaped rib features labeled W2 in the table below and having a tread sculpture as shown in FIG. 2.

**Table 1: Testing Results**

| | W1 | W2 | E1 | W3 |
|---|---|---|---|---|
| Rolling Resistance | 95.6% | 95.1% | 91.2% | 100% |
| (normalized to W3 %) | | | | |
| Rolling Resistance (delta KG/Ton) | 0.37 | .12 | .32 | 0.0 |
| GM Spin (W3%) | 106.3% | 122.5% | 93.8% | 100% |
| GM Spin Rate (%) | 85% | 98% | 75% | 80% |
| Snow - Obj. Lateral (W3 %) | 97.8% | 102.2% | 89.9% | 100% |
| Wet Braking - A9 (W3 %) | 100.8% | 100% | 99% | 100% |
| Dry Braking - OE (W3 %) | 104.6% | 102.6% | 103.8% | 100% |
| Dry Braking - C6 (W3 %) | 101.6% | 101.1% | 103.6% | 100% |
| Lateral Torsion D(Z) (W3 %) | 114.7% | 105.8% | 114.0% | 100% |
| Lateral Shear DY/DX (%) | 4.91% | -1.9% | 0.18% | -4.94% |

The reference witness W3, to which the other measurements are normalized (unless otherwise stated) possessed five ribs having lateral features extending from the upper left and angled down and to the right of the tread sculpture as oriented in the figure. W1, refers to a witness tire having a helically oriented lateral features extending from the left side of the tire and extending down and to the right of the tread sculpture as depicted in FIG. 1. W2 refers to a sculpture having a V-shaped tread sculpture, such that the lateral features extend across the tire in a lateral direction, first down and to the right, then, at or near the equatorial plane of the tire continue to extend, up and to the right, forming a V-shaped tread sculpture pattern such as depicted in FIG 2.

An embodiment of the invention, identified as E1 in the table having a tread pattern in accordance with the invention and having a tread pattern sculpture as depicted in FIG 4, was tested and compared to the other witness tires. As can be seen in the testing results, the dry braking improvement of the embodiment of the invention was seen comparable to the helical design with the continuous ribs extending laterally across the tire. The center rib having sipes angled at an opposite direction, however, reduced the lateral pull of the tire under acceleration compared to the helical tread design W1 for both lateral pull dx/dy and lateral torsion dz while still providing snow traction comparable to the conventional 5 rib witness tire W3.

The rolling resistance of a tire is measured by conducting an industry standard rolling resistance test on drum machine to determine the coefficient of rolling resistance (kg/ton). The value was normalized to the witness W3 tire. The test tire E1, embodying the invention disclosed herein, provided comparable rolling resistance values compared to the helical witness tire W1.

The grip on snow-covered ground is evaluated by measuring the forces on a single driven lest t e in snow according to the ASTM F1805 test method. The vehicle travels at a constant 5 mph speed and the forces are measured on the single test tire at the target slip. A value greater than that of the Standard Reference Test Tire (SRTT), which is arbitrarily set to 100, indicates an improved result, i.e., improved grip on snow. The value was normalized to the witness W3 tire. The test tire E1 provided a slight decrease of grip during the snow spin test compared to the helical witness tire W1, but comparable to that of the five-rib witness tire W2.

Lateral acceleration under snow conditions is measured objectively using accelerometers during vehicle testing along a testing course. During such testing, at least 5 laps along a road course were conducted by different drivers, where subjective snow handling measures were provided by the drivers according to SAE standards while accelerometers were used to measure acceleration, deceleration, and lateral accelerations along predefined segments along the testing course. The data was filtered and averaged to provide accurate results. The value was normalized to the witness W3 tire. The test tire E1 provided a snow objective lateral acceleration performance that was slightly less than the helical witness tire.

The wet braking performance (WB) of a tire mounted on an automobile fitted with an ABS braking system is measured by determining the distance necessary to go from 40 mph to a complete stop upon sudden braking on a wetted (no puddles) asphalt surface. A value greater than that of the control, which is arbitrarily set to 100, indicates an improved result, i.e., a shorter braking distance indicating improved wet grip. The test tire E1 provided a wet breaking value that was comparable to all three witness tires W1, W2 and W3.

The dry grip performance (DG) of a tire mounted on an automobile fitted with an ABS braking system is measured by determining the distance necessary to go from 60 mph to a complete stop upon sudden braking on a dry asphalt surface. A value greater than that of the control, which is arbitrarily set to 100, indicates an improved result, i.e., a shorter braking distance and improved dry grip. The test tire E1 provided a superior dry braking result when compared to the witness tires W1, W2 and W3.

Lateral torsion and lateral shear were measured by conducting an industry standard lateral force measurement test on drum machine to determine the lateral forces and torsional forces produced by the test tire. The value for the lateral torsion D(Z) was normalized to the witness W3 tire. The test tire E1 provided values of lateral torsion D(Z) that were an improvement over the helical witness tire W1. The test tire E1 also showed a marked improvement in the lateral shear (DY/DX) compared to the helical witness tire W1 and compared to the five-rib witness tire W3.

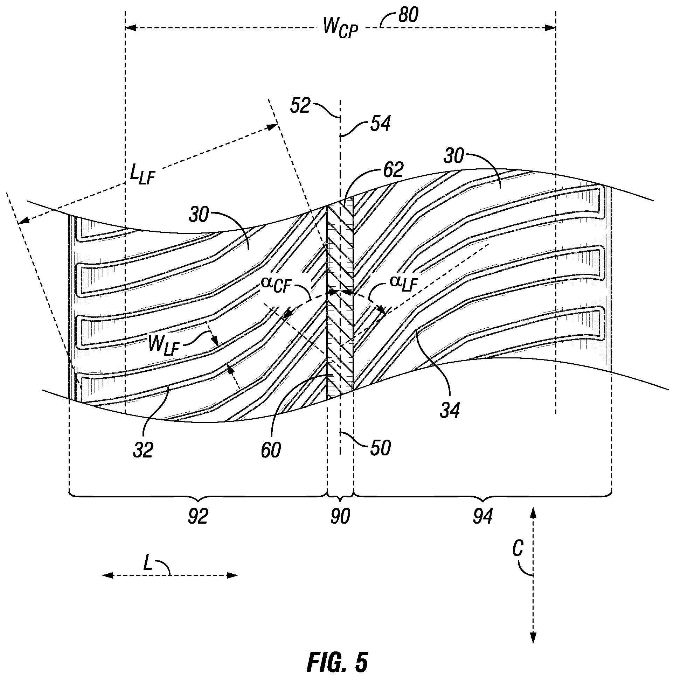

FIG. 5 provides an alternative exemplary embodiment of the invention. Here the tread sculpture 20 lacks circumferential grooves separating the center rib 60 from the lateral ribs 30 of the shoulder regions 90, 92. In this embodiment the tread sculpture 20 possesses a plurality of lateral features 32, 34 which extend from the center rib 60 to the lateral edges of the tread. The lateral features, extend a depth into the tread surface and possess a length L_{LF} that is greater than the maximum width W_{LF} of the lateral feature. The lateral features 32, 34 have a width W_{LF} that changes along the length of the feature. In an alternative embodiment the width may be constant.

The lateral features 32, 34 depicted in this embodiment show features having bends along their length such that the angle made between a line tangent with the centerline of the feature 32, 34 and the equatorial line 50 of the tire 10 becomes greater as measured farther from the center of the tire. In other words, the lateral features 32 become more laterally oriented near the shoulder of the tire tread and more circumferentially oriented near the center of the tire tread. The angle of the feature is measured between the equatorial line 50 of the tire to a line bisecting both a point at center of the feature at the end closest to the equatorial line 50 of the tire and a point at the center of the feature at the lateral edge of the contact patch width W_{CP} of the tread. The angle of the lateral features in accordance with the invention should be between 40 and 55 degrees.

The center rib 60 possesses a plurality of lateral features 62 that are angled opposite to that of the shoulder region lateral features 32, 34. In other words, there is a first plurality of lateral features 32 extending from the middle region 90 through the first shoulder region 92 at an angle α_{LF} in the range from 40 degrees to 55 degrees from a first side 54 of the equatorial plane 50 in a first angular direction, here, clockwise from the equatorial plane 50. A second plurality of lateral features 34 extending from the middle region 90 through the second shoulder region 94 at an angle α_{LF} in the range from 40 degrees to 55 degrees from the first side 54 of the equatorial plane in the first angular direction. A center rib 60 extending circumferentially around the tire10 located in the middle region 90 has a third plurality of lateral features 62 at an angle α_{CF} of 45 degrees to 60 degrees from a second side 52 equatorial plane 50 in a second angular direction, here, counter-clockwise from the equatorial plane 50.

Selected combinations of aspects of the disclosed technology correspond to a plurality of different embodiments of the present invention. It should be noted that each of the exemplary embodiments presented and discussed herein should not insinuate limitations of the present subject matter. Features or steps illustrated or described as part of one embodiment may be used in combination with aspects of another embodiment to yield yet further embodiments. Additionally, certain features may be interchanged with similar devices or features not expressly mentioned which perform the same or similar function.

Any dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm." Also, the dimensions and values disclosed herein are not limited to a specified unit of measurement. For example, dimensions expressed in English units are understood to include equivalent dimensions in metric and other units (e.g., a dimension disclosed as "1 inch" is intended to mean an equivalent dimension of "2.5 cm").

The terms "a," "an," and the singular forms of words shall be taken to include the plural form of the same words, such that the terms mean that one or more of something is provided. The terms "at least one" and "one or more" are used interchangeably. Ranges that are described as being "between a and b" are inclusive of the values for "a" and "b."

## Claims

1. A tread for a passenger car tire (10), the tire (10) having an axis of rotation and an equatorial plane (50) perpendicular to the axis of rotation and bisecting the tire (10), the tire (10) comprising:
a tread portion having a first shoulder region (92), a middle region (90) and a second shoulder region (94);
a first plurality of lateral features (32) extending from the middle region (90) through the first shoulder region (92) at an angle (α_{LF}) in the range from 40 degrees to 55 degrees from a first side of the equatorial plane in a first angular direction;
a second plurality of lateral features (34) extending from the middle region (90) through the second shoulder region (94) at an angle (α_{LF}) in the range from 40 degrees to 55 degrees from the first side of the equatorial plane in the first angular direction;
a center rib (60) extending circumferentially around the tire (10), the center rib (60) located in the middle region (90) having a third plurality of lateral features (62) at an angle (α_{CF}) of 45 degrees to 60 degrees from a second side of the equatorial plane in a second angular direction,
**characterized in that**
said third plurality of lateral features (62) are lateral sipes.

2. The tread of any one of the above claims further comprising one or more longitudinal features.

3. The tread of claim 2 wherein the one or more longitudinal features are one or more longitudinal grooves.

4. The tread of any one of the above claims wherein the tread is nondirectional.

5. A pneumatic tire (10) having a tread in accordance with any one of the above claims wherein the pneumatic tire (10), when mounted to a rim and under nominal pressure and placed against the ground under nominal loading conditions, has a contact patch and wherein the first plurality of lateral features (32) and the second plurality of lateral features (34) extend from the middle region (90) to a point past the contact patch.

## Patentansprüche

1. Lauffläche für einen Personenwagenreifen (10), wobei der Reifen (10) eine Rotationsachse und eine äquatoriale Ebene (50) senkrecht zu der Rotationsachse und den Reifen (10) halbierend aufweist, wobei der Reifen (10) Folgendes umfasst:
einen Laufflächenabschnitt, der einen ersten Flankenbereich (92), einen Mittelbereich (90) und einen zweiten Flankenbereich (94) aufweist;
eine erste Vielzahl seitlicher Merkmale (32), dies ich von dem Mittelbereich (90) durch den ersten Flankenbereich (92) bei einem Winkel (α_{LF}) in der Spanne von 40 Grad bis 55 Grad von einer ersten Seite der äquatorialen Ebene in einer ersten Winkelrichtung erstrecken;
eine zweite Vielzahl seitlicher Merkmale (34), die sich von dem Mittelbereich (90) durch den zweiten Flankenbereich (94) bei einem Winkel (α_{LF}) in der Spanne von 40 Grad bis 55 Grad von der ersten Seite der äquatorialen Ebene in der ersten Winkelrichtung erstrecken;
eine mittige Rippe (60), die sich umlaufend um den Reifen (10) erstreckt, wobei die mittige Rippe (60), die sich in dem Mittelbereich (90) befindet, eine dritte Vielzahl seitlicher Merkmale (62) bei einem Winkel (α_{CF}) von 45 Grad bis 60 Grad von einer zweiten Seite der äquatorialen Ebene in einer zweiten Winkelrichtung aufweist,
**dadurch gekennzeichnet, dass**
die dritte Vielzahl seitlicher Merkmale (62) seitliche Lamellen sind.

2. Lauffläche nach einem der vorstehenden Ansprüche, die weiter ein oder mehrere Längsmerkmale umfasst.

3. Lauffläche nach Anspruch 2, wobei das eine oder die mehreren Längsmerkmale eine oder mehrere Längskerben sind.

4. Lauffläche nach einem der vorstehenden Ansprüche, wobei die Lauffläche nicht richtungsgebunden ist.

5. Luftreifen (10), der eine Lauffläche in Übereinstimmung mit einem der vorstehenden Ansprüche aufweist, wobei der Luftreifen (10), wenn er auf einer Felge und unter Nenndruck montiert und unter Nennlastbedingungen am Boden platziert wird, eine Kontaktfläche aufweist, und wobei sich die erste Vielzahl von seitlichen Merkmalen (32) und die zweite Vielzahl von seitlichen Merkmalen (34) von dem Mittelbereich (90) zu einem Punkt außerhalb der Kontaktfläche erstrecken.

## Revendications

1. Bande de roulement pour un pneu (10) de voiture particulière, le pneu (10) ayant un axe de rotation et un plan équatorial (50) perpendiculaire à l'axe de rotation et bissectant le pneu (10), le pneu (10) comprenant :
une portion de bande de roulement ayant une première région d'épaulement (92), une région centrale (90) et une deuxième région d'épaulement (94) ;
une première pluralité de caractéristiques latérales (32) s'étendant de la région centrale (90) à travers la première région d'épaulement (92) à un angle (α_{LF}) dans la plage de 40 degrés à 55 degrés à partir d'un premier côté du plan équatorial dans une première direction angulaire ;
une deuxième pluralité de caractéristiques latérales (34) s'étendant de la région centrale (90) à travers la deuxième région d'épaulement (94) à un angle (α_{LF}) dans la plage de 40 degrés à 55 degrés à partir du premier côté du plan équatorial dans la première direction angulaire ;
une nervure centrale (60) s'étendant circonférentiellement autour du pneu (10), la nervure centrale (60) située dans la région centrale (90) présentant une troisième pluralité de caractéristiques latérales (62) à un angle (α_{CF}) de 45 degrés à 60 degrés à partir d'un deuxième côté du plan équatorial dans une deuxième direction angulaire,
**caractérisée en ce que**
ladite troisième pluralité de caractéristiques latérales (62) sont des lamelles latérales.

2. Bande de roulement selon l'une quelconque des revendications ci-dessus comprenant en outre une ou plusieurs caractéristiques longitudinales.

3. Bande de roulement selon la revendication 2 dans laquelle les une ou plusieurs caractéristiques longitudinales sont une ou plusieurs rainures longitudinales.

4. Bande de roulement selon l'une quelconque des revendications précédentes dans laquelle la bande de roulement est non directionnelle.

5. Pneumatique (10) ayant une bande de roulement selon l'une quelconque des revendications ci-dessus, dans lequel le pneumatique (10), lorsqu'il est monté sur une jante et sous pression nominale et placé contre le sol dans des conditions de charge nominale, présente une aire de contact et dans lequel la première pluralité de caractéristiques latérales (32) et la deuxième pluralité de caractéristiques latérales (34) s'étendent de la région centrale (90) à un point au-delà de l'aire de contact.
